# EUROPEAN PATENT APPLICATION

(11) **EP 2 159 088 A1**
(43) Date of publication of application: **03.03.2010**
(21) Application number: 08380254.6
(22) Date of filing: 21.08.2008
(51) Int. Cl.: B60J 3/04

(54) **Device for filtering sunlight into the rear of a vehicle, based on LCD technology**

(71) Applicant: Martinez Vazques, Dario, 24544 Carracedo del Monasterio, Leon (ES)
(72) Inventor: Martinez Vazques, Dario, 24544 Carracedo del Monasterio, Leon (ES)

(57) **Abstract**

Based on a LCD glass (2), a regulator of electric intensity (4), and a hardware device (5) to memorize the intensity parameters to recover memorization when the contact of the vehicle is activated.
This device provides a quick and easy way to vary the amount of sunlight entering the passenger compartment of a vehicle, by controlling the intensity of electric current that reaches each of the LCD glass windows associated to the vehicle windows, and thereby filtering sunlight passing through the LCD glasses.

## Description

### Device for filtering sunlight into the rear of the vehicle, based on LCD technology.

Based largely on a special LCD glass, a regulator of electric intensity, a hardware device to memorize the intensity parameters LCD to recover memorization when the contact of the vehicle is activated.

With this device allows regular quick and easy way to variably the amount of sunlight we want into the passenger compartment of the vehicle, controlling the intensity of electric current that reaches each of the LCD glass windows and Rear window. you can manipulate the tone and transparency of pixel LCD; thus may regulate the brightness into the passenger compartment of the vehicle through the filtering sunlight passing through the LCD glass.

Selector device for glass LCD and intensity regulator (4) allows to selecting (6) ) window vehicle or rear window of the vehicle (a, b, c), also allows controlling the tone of dark LCD glass selected (7). This device send electric signal to each window.

We controll the intensity of electric current that reaches each of the LCD glass. One can manipulate the tone and transparency of the LCD glass so that it may regulate the brightness of the passenger compartment of the vehicle, filtering sunlight passing through the glass,

The controller (12) simplifies the use of LCD, providing a set of core functions that are invoked through the electrical interface.

The device selector (4) of LCD glass to darken / clarify, may be available on the dashboard of the vehicle or the driver's door. There could also be a device selector specific for each Icd glass in each rear door.

### BRIEF DESCRIPTION OF THE DRAWINGS

### Device for filtering sunlight into the rear of the vehicle, based on LCD technology

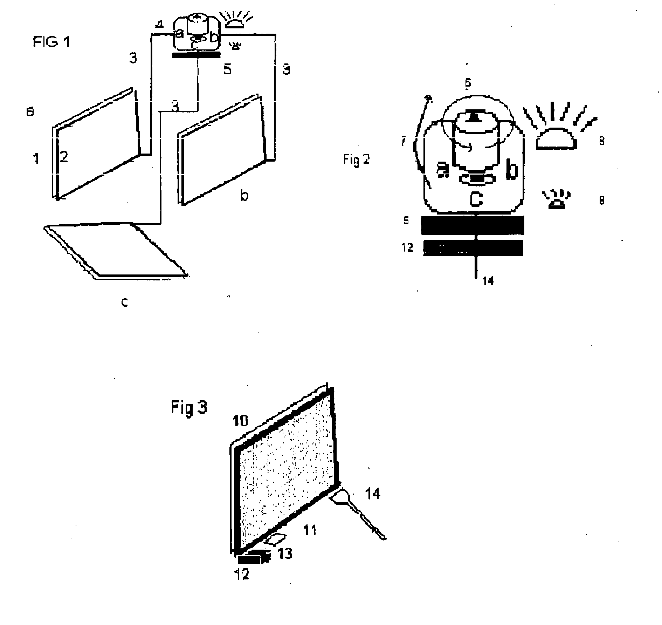

Figure 1 .- Overview of all devices required on the vehicle: (1) window normal of the vehicle, (2) special LCD glass, (3) cabling, (4) Selector Device of glass LCD and intensity regulator, (5) Memory module for managing storage parameterization intensities each of the LCD and managing this information for send signal specific for each LCD glass.
Figure 2 .- Selector device for glass LCD and intensity regulator: (6) Rotate forward, to reduce the filtering of light and allow the rear of the vehicle is more enlightened (8); turn back to increase the filtering that the rear of the vehicle is getting darker (9), (7) Turn 360 degrees to select the LCD glass to manipulate
Figure 3 - DETAIL glass LCD that appears annex to the normal glass of the window: (10) Normal glass (11) Special glass LCD sensitive to electrical signals

## Claims

1. A regulatory intensity flow (4) that allows addition to selecting (6) window vehicle or rear window of the vehicle (a, b, c) through the circular rotation of the small lever selection, depending on the glass that is aimed (a, b, c ) By the arrow at the top of the lever, also allows controlling the tone of dark LCD glass selected (7) through forward or backward movement of the lever.

2. An LCD glass sensitive to electric current (2) that would be annexed to the normal window glass (1) and will submit the darkening tone of it based on the value of the electrical signal it receives from the device regulator intensity.

3. An electronic memory device (5)-type SD or micro SD- for storing the parameters of tonality of each of the LCD. We can recover this memorized situation when they tour the key contact of the vehicle through a device driver and that would be located near the regulator intensity, below the lever selection.

4. An electronic device driver (12) that could go next to the memory device or next to the LCD, capable of reading the parameterization of memory and manage the electrical signal sent to the LCD to control the tone of the glass.
